# EUROPÄISCHE PATENTSCHRIFT

(11) **EP 1 088 579 B1**
(45) Veröffentlichungstag und Bekanntmachung des Hinweises auf die Patenterteilung: **27.09.2006**
(21) Anmeldenummer: 00121086.3
(22) Anmeldetag: 28.09.2000
(51) Int. Cl.: B01D 21/02, B01D 21/20, B01D 21/22

(54) **Flüssigkeitsbehälter,insbesondere Klärwerksbecken und Verfahren zum Eisfreihalten auf einer Wandung desselben**
Liquid container, in particular clarification plant tank and process for keeping a wall crown of the same ice-free
Réservoir pour liquide, en particulier bassin de station d'épuration, et procédé pour maintenir sans glace le dessus d'un mur composé de celui-ci

(30) Priorität: 01.10.1999 DE 19948102; 14.10.1999 DE 19949477
(43) Veröffentlichungstag der Anmeldung: 04.04.2001
(73) Patentinhaber: KRUMME, Friedrich, 36251 Bad Hersfeld (DE)
(72) Erfinder: KRUMME, Friedrich, 36251 Bad Hersfeld (DE)
(74) Vertreter: Möller, Friedrich

(56) Entgegenhaltungen:
- EP-A- 0 052 864
- AT-B- 392 257
- DE-A- 3 610 720
- DE-B- 1 122 458
- DE-C- 4 209 059
- GB-A- 1 025 206

## Beschreibung

Die Erfindung betrifft einen Flüssigkeitsbehälter, insbesondere Klärwerksbecken, gemäß dem Oberbegriff des Anspruch 1 und ein Verfahren zum Eisfreihalten einer Abdeckung auf einer Wandung des Flüssigkeitsbehälters.

Üblicherweise werden Klärwerksbecken aus Beton hergestellt. Diese weisen eine sogenannte Räumer- oder Lüfterbrücke auf, welche auf Laufrädern über den Rand der Wandung des Klärwerksbeckens hinweg läuft.

Ein oberer Rand der Wandung der Klärwerksbecken wird als Lauffläche für die Laufräder der genannten Brücke genutzt. Die Laufflächen sind Witterungseinflüssen ausgesetzt. Im Winter müssen die Laufflächen von Eis freigehalten werden, damit die angetriebenen Laufräder der Räumerbrücke nicht durchdrehen. So ist aus der AT 392 257 B bekannt, die obere Krone der Wandung, auf der sich die Lauffläche befindet, elektrisch zu beheizen. Diese Beheizung ist mit einem erheblichen Energieaufwand verbunden, weil der Beton der gesamten Krone der Wandung aufgeheizt werden muß.

Demgemäß liegt der Erfindung die Aufgabe zugrunde, einen Flüssigkeitsbehälter der eingangs beschriebenen Art und ein Verfahren zu schaffen, womit die Lauffläche mit geringerem Energieaufwand eisfrei gehalten werden kann.

Diese Aufgabe wird gelöst durch einen Flüssigkeitsbehälter mit den Merkmalen des Anspruchs 1.

Vorzugsweise ist die Rinne seitlich und an ihrer Unterseite flüssigkeitsdicht. Dies gilt vorzugsweise auch dann, wenn die Rinne aus Teilstücken zusammengesetzt ist.

Nach einer bevorzugten Ausgestaltung der Erfindung ist die Rinne aus Beton, insbesondere aus Betonelementen gefertigt. Die Laufflächen für die Laufräder sind aus Betonplatten zusammengesetzt. In diese Betonplatten können vorzugsweise konische Nuten zur Bildung der Laufflächen eingeformt oder eingefräst sein. Die Breite der Lauffläche ist etwas kleiner als die Breite der Nut. Besonders vorteilhaft ist die Herstellung der Rinne aus Metallblechen. Diese sind vorzugsweise mit U- oder H-förmigen Profil, d. h. mit zumindest aufwärts gekanteten, einander gegenüberliegenden Rändern hergestellt. Mehrere, aneinander anschließende Bleche, die insbesondere flüssigkeitsdicht miteinander verbunden sind, können die insgesamt ringförmige Lauffläche auf der ringförmigen Wandung bilden. Vorzugsweise wird Stahlblech oder Aluminiumblech verwendet. Auch können die einzelnen Teilstücke der Rinne als Gußteile hergestellt sein.

Ein besonderer Aspekt der Erfindung betrifft die Gestaltung des Laufrades. Diesem ist ein Räummittel zugeordnet, mit dem auf der Lauffläche und/oder auf einer in der Rinne befindlichen Flüssigkeit vorhandene Feststoffe aus der Spur des Laufrades verdrängbar sind. Vorzugsweise weist das Räummittel zu diesem Zweck ein Schild mit einen Winkel bildenden Räumflächen auf. Die Räumflächen sind in Laufrichtung vor dem Laufrad montiert und derart ausgerichtet, dass Feststoffe, insbesondere Eis, angehoben und nach außen abgelenkt werden. So können die Räumflächen in eine in der Rinne befindliche Flüssigkeit eintauchen und das ggf. auf der Flüssigkeit vorhandene Eis von unten nach oben aufbrechen und zur Seite verdrängen.

Vorzugsweise sind Mittel zur Erzeugung eines Flüssigkeitsumlaufs zwischen dem Flüssigkeitsbehälter und der Rinne vorgesehen, insbesondere derart, dass relativ warmes Klärwasser aus dem Flüssigkeitsbehälter in die Rinne eingelassen wird, dort eine möglichst lange Strecke zurücklegt bzw. umläuft und dann zumindest als Teilvolumen oder Teilstrom der Rinne wieder entnommen und in den Flüssigkeitsbehälter gegeben wird. Auch kann die Flüssigkeit dem Flüssigkeitsbehälter vor- oder nachgeordneten Flüssigkeitsräumen, etwa Rohrleitungen, entnommen und/oder in diese aus der Rinne eingeleitet werden.

Zum Ablassen der Flüssigkeit weist die Rinne Ablassöffnungen oder Ablassventile auf. Auch kann ein Ablauf oder Überlauf vorgesehen sein, insbesondere nahe einem Flüssigkeitseinlass, derart, dass Flüssigkeit im Kreislauf entlang der Rinne führbar ist.

Die Aufgabe der Erfindung wird des weiteren durch ein Verfahren gemäß den Merkmalen des Anspruchs 7 gelöst.

Die in der Rinne vorhandene Flüssigkeit weist einen niedrigeren Schmelzpunkt als Wasser auf. So ist gewährleistet, dass sich allenfalls erst weit unter 0° eine feste Schicht (Eis) bildet. Beispielsweise enthält die in der Rinne vorhandene Flüssigkeit Salz zur Herabsetzung des Schmelzpunkts. Vorteilhaft ist auch eine Mischung aus Wasser und Frostschutzmittel.

Vorteilhafterweise ist oder enthält die in der Rinne vorhandene Flüssigkeit Öl, insbesondere halogeniertes Öl. Letzteres ist durch entsprechende Zuschlagstoffe schwerer als Wasser. Durch Auswahl des geeigneten Öls werden Viskosität, Reibungswert und Schmelzpunkt festgelegt. Da eine möglichst hohe Reibung zwischen Laufrädern und Lauffläche wünschenswert ist, sollte ein Öl mit entsprechenden Gleitwerten ausgewählt werden. Besonders vorteilhaft ist ein (im Klärwerksbecken) biologisch abbaubares und damit umweltfreundliches Öl.

Vorteilhafterweise nimmt die Rinne eine den Kontakt verbessernde Flüssigkeit auf. Diese kann schwerer als Wasser sein und sollte sich mit Wasser nicht vermischen. Sofern sich in der Rinne Regenwasser sammelt, das bei Frost Eis bildet, schwimmt dieses an der Oberfläche der Flüssigkeit und läuft ggf. über die Ränder der Rinne ab. Die Laufräder brechen durch die Eisschicht durch und rollen ungehindert auf der Lauffläche am Boden der Rinne ab. Die angetriebenen Laufräder können so nicht mehr auf einer Eisschicht durchdrehen.

Besonders vorteilhaft ist eine Ausführungsform der Erfindung, bei der die Rinne Flüssigkeit aus dem Flüssigkeitsbehälter enthält. Entsprechend der Anwendung als Klärwerksbecken wird Klärwasser verwendet. Dieses hat üblicher Weise eine Temperatur von etwa 20°C oder mehr und wird bei Frost oder Frostgefahr in die Rinne eingeleitet.

Vorteilhafterweise wird die Flüssigkeit bzw. das Klärwasser vor dem Einleiten in die Rinne gefiltert. Eventuell vorhandene Feststoffe oder Schwebeteilchen werden so wirksam zurück gehalten.

Das Klärwasser bzw. die Flüssigkeit können ständig - ggf. auch mit Pausen - oder regelmäßig in die Rinne eingeleitet werden und aus der Rinne ablaufen bzw. entnommen werden. Das Klärwasser bzw. die Flüssigkeit strömt entlang eines möglichst langen Abschnitts der Rinne und hält diese eisfrei. Zweckmäßig ist das Einleiten der Flüssigkeit bzw. des Klärwassers an einer bestimmten Stelle mit einem gerichteten Strahl zur Erzielung einer umlaufenden Strömung. Nach nahezu einer vollen Umrundung des Flüssigkeitsbehälters ist ein Überlauf vorgesehen, über den ein Großteil der umlaufenden Flüssigkeit in den Flüssigkeitsbehälter zurück fließt.

Zeitpunkt, Häufigkeit und Geschwindigkeit der Einleitung des Klärwassers bzw. der Flüssigkeit können in Abhängigkeit von der Temperatur geregelt werden, etwa derart, dass bei niedrigerer Temperatur schneller, mehr und/oder häufiger Flüssigkeit zugeführt oder umgewälzt wird als bei höherer Temperatur.

Oberhalb einer bestimmten Temperatur - vorzugsweise oberhalb 0°C - wird das Klärwasser bzw. die Flüssigkeit nicht mehr bewegt und insbesondere - etwa im Sommer - auch abgelassen.

Für die Steuerung des Umlaufs oder der Zufuhr der Flüssigkeit in die Rinne bzw. in der Rinne kann die Temperatur der Umgebungsluft und/oder der Rinne heran gezogen werden.

Sofern das Klärwerksbecken nicht rund, sondern rechteckig aufgebaut ist, ergibt sich eine nicht gekrümmte Laufrichtung für die Laufräder. Die Räumerbrücke rotiert dann nicht um einen festen Mittelpunkt, sondern wird zwischen Endpunkten hin- und hergefahren. Entsprechend sind die Rinne und die Lauffläche gerade ausgebildet.

Weitere Merkmale der Erfindung - auch zum Verfahren - ergeben sich aus den Ansprüchen und der Beschreibung.

Ausführungsbeispiele der Erfindung werden nachfolgend anhand von Zeichnungen erläutert. Es zeigen:
- Fig. 1: einen schematischen Querschnitt durch einen Teil einer Räumerbrücke und eine Wandung eines Klärwerksbeckens,
- Fig. 2: eine geringfügig modifizierte Darstellung eines Details aus Fig. 1,
- Fig. 3: eine weitere modifizierte Darstellung eines Details aus Fig. 1,
- Fig. 4: die Darstellung gemäß Fig. 3 in Seitenansicht und mit einem zusätzlichen Detail (Räummittel),
- Fig. 5: eine umlaufende Wandung eines Klärwerksbeckens mit Rinne in der Draufsicht,
- Fig. 6: eine Innenansicht der Wandung gemäß Fig. 5 in abgewickelter Darstellung.

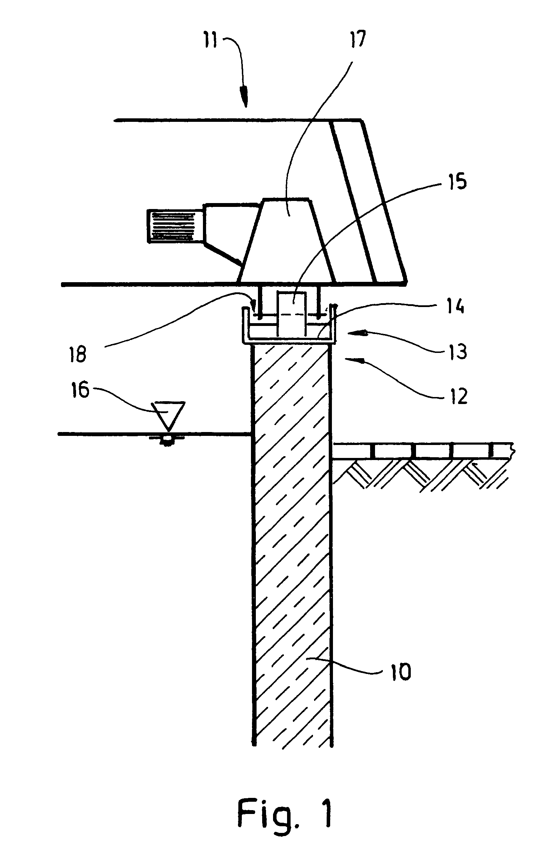

Fig. 1 zeigt einen Querschnitt durch eine (ringförmige) Wandung 10 eines Klärwerksbeckens mit Räumerbrücke 11. Auf einer Krone 12 der Wandung 10 ist eine Abdeckung 13 zur Bildung einer kreisringförmigen Lauffläche 14 für Laufräder 15 der Räumerbrücke 11 angeordnet. Ein Flüssigkeitsspiegel im Klärwerksbecken ist in Fig. 1 links neben der Wandung 10 mit dem Dreieck 16 angedeutet. Rechts neben der Wandung 10 ist die Geländehöhe erkennbar. Das Klärwerksbecken ist somit in die Erde eingelassen, so dass der durch die Flüssigkeit entstehende Druck auf die Wandung 10 vom umliegenden Gelände aufgenommen wird.

Die Räumerbrücke 11 überstreicht gleichförmig - beispielsweise innerhalb einer Stunde - das Klärwerksbecken. Hierzu ist die Räumerbrücke 11 mit einem Antrieb 17 versehen, der auf mindestens eines der Laufräder 15 wirkt.

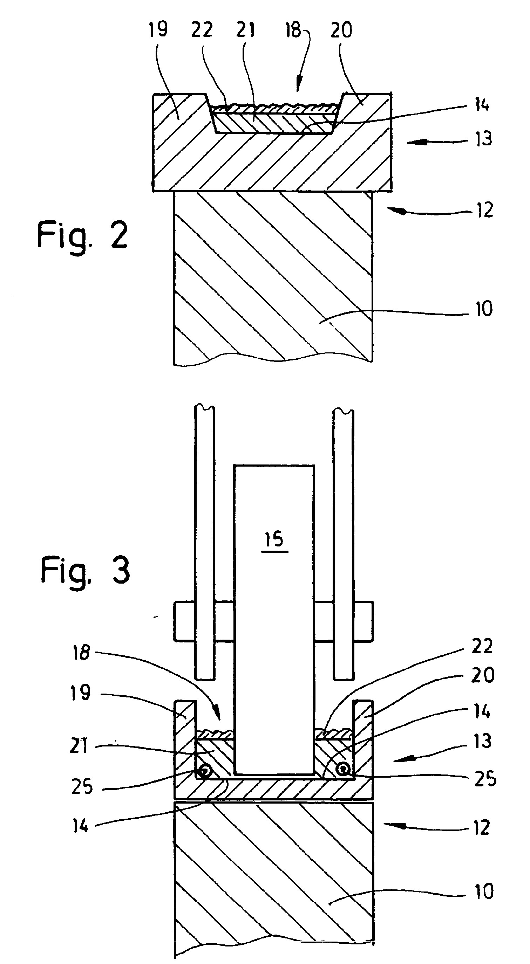

Die Abdeckung 13 ist als Rinne 18 ausgebildet (oder weist eine Rinne auf), in der die Lauffläche 14 angeordnet ist, auf der die Laufräder 15 abrollen. Gemäß Fig. 2 ist die Abdeckung 13 aus Beton gefertigt, beispielsweise aus in Längsrichtung der Lauffläche 14 aneinander anschließenden Fertigbetonteilen oder als aus Ortbeton hergestellter Aufsatz für die Krone 12 der Wandung 10. Die Rinne 18 ist in die Abdeckung 13 aus Beton eingeformt oder eingefräst und weist vorzugsweise einen leicht konischen Innenquerschnitt mit nach oben hin zunehmender Breite auf. Die Lauffläche 14 ist zugleich Teil der Bodenfläche der Rinne 18. Seitliche Wandungen 19, 20 der Abdeckung 13 sind zugleich Wandungen der Rinne 18.

Der die Lauffläche 14 bildende Boden der Rinne 18 ist etwas breiter ausgeführt als die Breite der Laufräder 15. Dadurch sollen nicht nur Toleranzen berücksichtigt werden, sondern es soll auch Raum für nachfolgend erläuterte Mittel bleiben.

In der Rinne 18 können besondere Mittel zur Gewährleistung eines von Frost oder Eis unbeeinträchtigten Betriebes angeordnet sein. So kann in die Rinne 18 Streusalz eingebracht werden, ohne dass dieses abgeweht oder ausgespült wird. In der Rinne 18 sich sammelnde Feuchtigkeit oder Regen bildet einen Wasserspiegel, der maximal bis zur Höhe der Seitenwände 19, 20 reicht und der insbesondere in Verbindung mit auftauenden Mitteln einen frostunabhängigen Betrieb ermöglicht. Die beschriebene konische Form der Rinne 18, nämlich die nach oben gerichtete Verbreiterung derselben, in der Ausführungsform der Fig. 2 verhindert ein Aufbrechen des Betons, sofern Eisbildung auftritt. In Fig. 2 ist die in der Rinne 18 vorhandene Flüssigkeit mit der Ziffer 21 und die darauf befindliche Eisschicht mit der Ziffer 22 bezeichnet. Hierin besteht ein wesentlicher Aspekt der Erfindung, nämlich die Schaffung und Gewährleistung einer flüssigen Füllung der Rinne 18 unter der Eisschicht 22.

Die Flüssigkeit 21 kann auch bewußt in die Rinne 18 eingebracht sein, um zu erreichen, dass eine Eisbildung nicht im Bereich der Lauffläche 14 sondern nur an der Oberfläche der Flüssigkeit 21 auftritt. Der etwa mit einer Umdrehung pro Stunde umlaufende Räumer bricht mit seinen Laufrädern 15 die Eisschicht 22 stets aufs Neue auf. Die Laufräder 15 können so ungehindert auf der Lauffläche 14 abrollen.

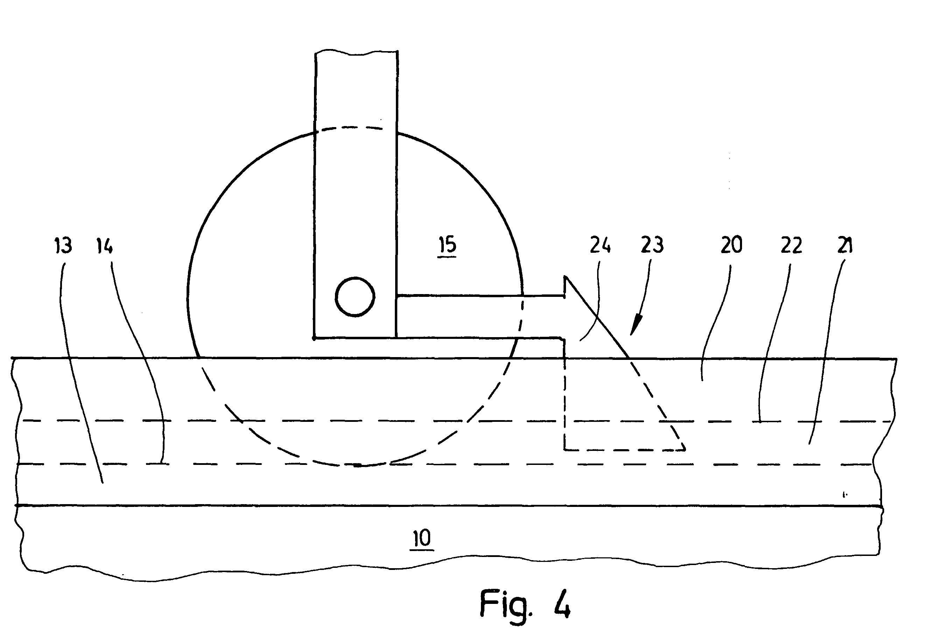

Erleichtert wird das Aufbrechen der Eisschicht 22 durch ein in Fig. 4 gezeigtes Räummittel, nämlich ein Räumschild 23, das vor dem Laufrad 15 angeordnet ist und zum Teil in die Flüssigkeit 21 eintaucht. Durch geeignete Ausbildung, insbesondere eine schräge Anordnung von Räumflächen 24 am Räumschild 23 ist es möglich, die Eisschicht 22 nach oben und zur Seite zu verdrängen und so das Überrollen von Eisstücken zu verhindern. Vorzugsweise bilden zwei Räumflächen 24 einen Winkel zueinander, so dass das Eis zu beiden Seiten und nach oben weggedrückt wird.

In der Rinne 18 kann zusätzlich eine Flüssigkeit eingebracht sein, die schwerer als Wasser ist, erst bei niedrigeren Temperaturen gefriert und bei üblichen Außentemperaturen nicht verdampft. Auch sollte die Flüssigkeit umweltfreundlich sein bzw. sich mit Regenwasser nicht vermischen. Sobald sich in der Rinne 18 zusätzlich Feuchtigkeit oder Regenwasser sammelt, bleibt dieses auf der Oberfläche der schwereren Flüssigkeit, so dass die Lauffläche 14 stets eisfrei bleibt. An der Oberfläche der Flüssigkeit sich bildendes Eis wird von den Laufrädern 15 gebrochen und ggf. von dem Räumschild 23 angehoben und beiseite gedrückt. Bei Überlauf der Rinne 18 durch starken Regen verbleibt die besondere, schwerere Flüssigkeit ebenfalls in der Rinne 18.

Nach einem weiteren Ausführungsbeispiel der Erfindung ist in der Rinne eine Flüssigkeitsmischung aus Wasser und Frostschutzmittel vorgesehen. Vor starken Regenfällen kann die Flüssigkeit abgelassen und aufgefangen werden. Bei Bedarf, etwa bei angekündigtem Frost, wird die Flüssigkeit wieder in die Rinne 18 eingeleitet.

In Fig. 3 ist die Abdeckung 13 aus Stahlblech mit U-förmigem Querschnitt hergestellt. Verbindungsmittel zwischen der Abdeckung 13 und der Mauerkrone 12 sind vorhanden aber nicht extra eingezeichnet (gilt auch für Fig. 1 und 2). Auch können einzelne Teilstücke aus Stahlblech zur Bildung der umlaufenden, durchgehenden Lauffläche 14 miteinander verbunden sein.

Aufgrund der im Verhältnis zu Beton höheren Elastizität des Stahlblechs ist ein konischer Querschnitt nicht erforderlich, kann aber vorgesehen sein. Der die Lauffläche 14 bildende Boden der Rinne 18 ist wiederum etwas breiter als das Laufrad 15.

Gemäß einer alternativen Ausführungsform der Erfindung, die in der Fig. 3 dargestellt ist, aber auch für die Abdeckung 13 der Fig. 2 gelten kann, sind Heizleiter 25 am Boden der Rinne 18 neben der Lauffläche 14 und nahe den Seitenwandungen 19, 20 vorgesehen. Denkbar ist es auch, nur einen Heizleiter 25 oder mehr als zwei Heizleiter 25 vorzusehen. Die Heizleiter 25 können verschiedener Art sein, beispielsweise als elektrische Widerstandsdrähte oder als von erwärmter Flüssigkeit durchflossene Leitungen oder Rohre. In der Rinne 18 befindliche Flüssigkeit wird durch die Heizleiter 25 nach Bedarf aufgeheizt und so eisfrei gehalten. Vorzugsweise sind dann zumindest die Innenseiten der Wandungen 19, 20 und der Boden der Rinne 18 mit einer Wärmeisolierung versehen. Beim Verbundensein mindestens eines Heizleiters 25 in der Rinne 18 kann es ausreichen, wenn hierin nur Wasser vorhanden ist, beispielsweise Regenwasser. Das Beheizen nur des Wassers zur Eisfreihaltung der Rinne 18 erfordert deutlich weniger Energie als das bisher erfolgende Beheizen der gesamten Krone 12 des Klärwerksbeckens.

Die Abdeckung 13 kann auch aus anderen Werkstoffen bestehen, etwa aus Aluminiumblech, Metallguß oder dergleichen. Wichtig ist die Bildung einer Rinne, in der eine Flüssigkeit oder frosthindernde Mittel gehalten werden können.

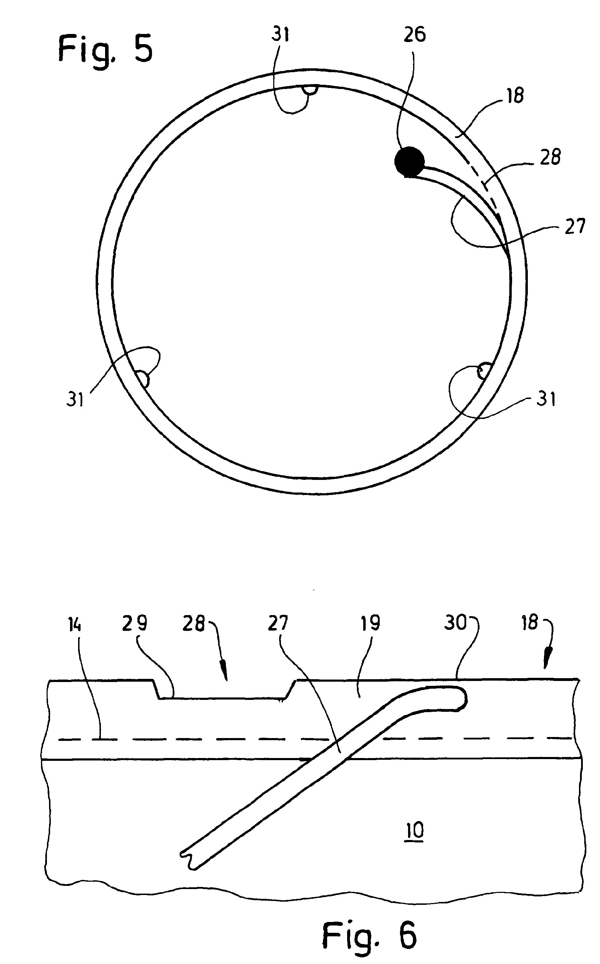

Die Rinne 18 verläuft gemäß Fig. 5 kreisrund. Aus Gründen der besseren Übersichtlichkeit ist die Räumerbrücke 11 hier nicht gezeichnet. Aus dem Klärwerksbecken wird Flüssigkeit, nämlich Klärwasser durch eine Pumpe 26 und über eine innen liegende Zuleitung 27 in die Rinne 18 eingeleitet. Die zugeführte Flüssigkeit ist dabei gerichtet, nämlich mit einem möglichst kleinen Winkel gegenüber einer Tangente zur umlaufenden Rinne 18. Gemäß Fig. 6 ist die Zuleitung 27 eine aus dem Klärwerksbecken aufwärts geführte Rohrleitung, die in die innen liegende Seitenwand 19 der Rinne 18 einmündet. Auf Grund des kleinen Winkels relativ zur Tangente stellt sich automatisch eine Strömung der Flüssigkeit entlang der Rinne 18 ein. Sofern die Rinne 18 vereist ist oder Vereisungsgefahr droht, kann durch die relativ warme Flüssigkeit aus dem Klärbecken jegliche Eisglätte vermieden werden.

Das in der Rinne 18 umlaufende Wasser gelangt über einen Überlauf 28 nahe der Zuleitung 27 zurück ins Klärwerksbecken. Eine Oberkante 29 des Überlaufs 28 liegt unterhalb einer Oberkante 30 der Wandungen 19, 20 und oberhalb der Lauffläche 14. Dadurch ist sicher gestellt, dass stets etwas Flüssigkeit in der Rinne 18 vorhanden ist.

Die Zufuhr der Flüssigkeit über die Zuleitung 27 wird in Abhängigkeit von der Temperatur gesteuert. D. h., je niedriger die Temperatur ist, umso häufiger oder schneller wird Flüssigkeit aus dem Klärwerksbecken in die Rinne 18 eingeleitet. Oberhalb von 0°C ist eine Flüssigkeitszufuhr nicht erforderlich. Vorsorglich kann eine Sicherheitsspanne eingehalten werden, etwa +2°C. Bei höheren Temperaturen, insbesondere im Sommer, wird die Flüssigkeit aus der Rinne 18 abgelassen. Hierfür sind gesonderte Auslassöffnungen oder Ventile 31 innen am Umfang der Rinne 18 vorgesehen. Die Ventile werden von Hand oder elektromagnetisch betätigt und sind so angeordnet, dass die Flüssigkeit aus der Rinne 18 vollständig ablaufen kann. Gemäß Fig. 5 sind am Innenumfang der Rinne 18 mit gleichen Abständen drei Ventile 31 vorgesehen.

In einer nicht gezeigten Ausführungsform - aber ähnlich der Ausführung gemäß Fig. 5 und 6 - ist parallel zur Rinne 18 eine Pumpe geschaltet, mit der ein Umlauf der Flüssigkeit in der Rinne 18 einstellbar ist. Auch hier ist eine Temperatursteuerung sinnvoll, etwa zum Auslösen der Zufuhr frischer bzw. wärmerer Flüssigkeit.

### Bezugszeichenliste:

- 10: Wandung
- 11: Räumerbrücke
- 12: Krone
- 13: Abdeckung
- 14: Lauffläche
- 15: Laufräder
- 16: Dreieck
- 17: Antrieb
- 18: Rinne
- 19: Seitenwand
- 20: Seitenwand
- 21: Flüssigkeit
- 22: Eisschicht
- 23: Räumschild
- 24: Räumflächen
- 25: Heizleiter
- 26: Pumpe
- 27: Zuleitung
- 28: Überlauf
- 29: Oberkante
- 30: Oberkante
- 31: Ventil

## Patentansprüche

1. Flüssigkeitsbehälter, insbesondere Klärwerksbecken, mit einer aufrechten, vorzugsweise ringförmigen Wandung (10), auf deren oberen Rand eine Abdeckung (13) zur Bildung einer Lauffläche (14) für Laufräder (15) einer Räumerbrücke (11) oder dergleichen befestigt ist, **dadurch gekennzeichnet, dass** die Abdeckung (13) mindestens eine oben offene Rinne (18) bildet, innerhalb derer die Lauffläche (14) für die Laufräder (15) der Räumerbrücke (11) angeordnet ist.

2. Flüssigkeitsbehälter nach Anspruch 1, **dadurch gekennzeichnet, dass** die Rinne (18) seitlich und an ihrer Unterseite flüssigkeitsdicht ist.

3. Flüssigkeitsbehälter nach Anspruch 1 oder 2, **dadurch gekennzeichnet, dass** mindestens einem Laufrad (15) ein Räummittel vorgeordnet ist, mit dem auf der Lauffläche (14) und/oder auf einer in der Rinne (18) befindlichen Flüssigkeit vorhandene Feststoffe oder E is aus der Spur des Laufrades (15) verdrängbar sind.

4. Flüssigkeitsbehälter nach mindestens einem der voranstehenden Ansprüche, **dadurch gekennzeichnet, dass** in der Rinne (18) und/oder der Abdeckung (13) mindestens ein Heizmittel zur Erwärmung einer in der Rinne (18) befindlichen Flüssigkeit angeordnet ist.

5. Flüssigkeitsbehälter nach mindestens einem der voranstehenden Ansprüche, **gekennzeichnet durch** Mittel zur Erzeugung eines Flüssigkeitsumlaufs in der Rinne (18) oder zwischen dem Flüssigkeitsbehälter und der Rinne (18).

6. Flüssigkeitsbehälter nach mindestens einem der voranstehenden Ansprüche, **dadurch gekennzeichnet, dass** die Rinne (18) zum Ablassen der Flüssigkeit Ablassöffnungen oder Ablassventile (31) aufweist.

7. Verfahren zum Eisfreihalten einer Abdeckung (13) auf einer Wandung (10) eines Klärwerksbeckens oder anderen Flüssigkeitsbehälters mit einer entlang der Abdeckung (13) verfahrbaren Räumerbrücke (11), wobei die Abdeckung mindestens eine Rinne (18) aufweist, in der Laufräder (15) der Räumerbrücke (11) entlang einer Lauffläche (14) abrollen, und in die Rinne (18) zumindest bei Frost nicht gefrierende Mittel eingebracht werden.

8. Verfahren nach Anspruch 7, **dadurch gekennzeichnet, dass** in die Rinne (18) mindestens ein bei Frost wirksames Mittel zur Verbesserung des Kontaktes zwischen Laufrädern (15) und Lauffläche (14) eingebracht wird, das schwerer als Wasser ist.

9. Verfahren nach Anspruch 7 oder 8, **dadurch gekennzeichnet, dass** als ein nicht gefrierendes Mittel eine in der Rinne (18) vorhandene Flüssigkeit verwendet wird, die einen niedrigeren Schmelzpunkt als Wasser aufweist.

10. Verfahren nach einem der vorhergehenden Ansprüche, **dadurch gekennzeichnet, dass** in der Rinne (18) eine Mischung aus Wasser und einem Mittel zur Herabsetzung des Schmelzpunktes angeordnet wird.

11. Verfahren nach einem der vorhergehenden Ansprüche, **dadurch gekennzeichnet, dass** in die Rinne (18) zumindest bei Frost Wasser mit einem so hohen Wasserstand eingebracht wird, dass über der Lauffläche (14) der Laufräder (15) eine Schicht ungefrorenen Wasser verbleibt und an der Wasseroberfläche sich bildendes Eis von Laufrädern (15) oder von diesen zugeordneten Räummitteln gebrochen wird.

12. Verfahren nach einem der vorhergehenden Ansprüche, **dadurch gekennzeichnet, dass** in die Rinne (18) zumindest bei Frost eine Flüssigkeit eingebracht wird, die schwerer als Wasser ist und einen niedrigeren Gefrierpunkt aufweist, sodass einer durch Regen oder Feuchte entstandene Eisschicht (22) auf der Flüssigkeit (21) schwimmt und dort von den Laufrädern oder denselben zugeordneten Räummitteln gebrochen wird.

13. Verfahren nach einem der vorhergehenden Ansprüche, **dadurch gekennzeichnet, dass** die Rinne bei Frost Klärwasser aus dem Flüssigkeitsbehälter enthält.

14. Verfahren nach einem der vorhergehenden Ansprüche, **dadurch gekennzeichnet, dass** in die Rinne (18) zumindest bei Frost Flüssigkeit aus dem Flüssigkeitsbehälter eingeleitet wird, wobei die Flüssigkeit eine Temperatur aufweist, die über der Temperatur der Rinne (18) oder der Umgebungsluft liegt.

15. Verfahren nach Anspruch 14, **dadurch gekennzeichnet, dass** die Flüssigkeit regelmäßig in die Rinne (18) eingeleitet wird und aus der Rinne (18) abläuft, wobei die Flüssigkeit in der Rinne (18) umläuft.

16. Verfahren nach Anspruch 14 oder 15, **dadurch gekennzeichnet, dass** die Flüssigkeit in einer von der Temperatur abhängigen Menge in die Rinne (18) eingeleitet wird.

## Claims

1. Liquid container, in particular clarification plant tank, with an upright, preferably annular wall (10), on the upper edge of which a cover (13) is secured to form a running surface (14) for running wheels (15) of a rotating scraper bridge (11) or the like, **characterized in that** the cover (13) forms at least one upwardly open channel (18) within which the running surface (14) for the running wheels (15) of the rotating scraper bridge (11) is arranged.

2. Liquid container according to Claim 1, **characterized in that** the channel (18) is liquid-tight laterally and on its lower side.

3. Liquid container according to Claim 1 or 2, **characterized in that** a clearing means is arranged upstream of at least one running wheel (15) and can be used to displace solids or ice present on the running surface (14) and/or on a liquid situated in the channel (18) out of the track of the running wheel (15).

4. Liquid container according to at least one of the preceding claims, **characterized in that** at least one heating means for heating a liquid situated in the channel (18) is arranged in the channel (18) and/or the cover (13).

5. Liquid container according to at least one of the preceding claims, **characterized by** means for generating a circulation of liquid in the channel (18) or between the liquid container and the channel (18).

6. Liquid container according to at least one of the preceding claims, **characterized in that** the channel (18) has discharge openings or discharge valves (31) for discharging the liquid.

7. Process for keeping a cover (13) on a wall (10) of a clarification plant tank or other liquid container ice-free, with a rotating scraper bridge (11) which is movable along the cover (13), the cover having at least one channel (18) in which running wheels (15) of the rotating scraper bridge (11) roll along a running surface (14), and means which do not freeze, at least when there is frost, are placed into the channel (18).

8. Process according to Claim 7, **characterized in that** at least one means which is effective when there is frost and which is heavier than water is placed into the channel (18) to improve the contact between running wheels (15) and running surface (14).

9. Process according to Claim 7 or 8, **characterized in that** a liquid which is present in the channel (18) and which has a lower melting point than water is used as a non-freezing means.

10. Process according to one of the preceding claims, **characterized in that** a mixture of water and a means for reducing the melting point is arranged in the channel (18).

11. Process according to one of the preceding claims, **characterized in that** water is placed into the channel (18) at such a high water level, at least when there is frost, that a layer of unfrozen water remains over the running surface (14) of the running wheels (15) and ice forming on the surface of the water is broken by running wheels (15) or by clearing means assigned thereto.

12. Process according to one of the preceding claims, **characterized in that** a liquid which is heavier than water and has a lower freezing point is placed into the channel (18), at least when there is frost, so that an ice layer (22) produced by rain or moisture floats on the liquid (21) where it is broken by the running wheels or clearing means assigned to the same.

13. Process according to one of the preceding claims, **characterized in that** the channel contains clarified water from the liquid container when there is a frost.

14. Process according to one of the preceding claims, **characterized in that** liquid from the liquid container is introduced into the channel (18), at least when there is a frost, the liquid having a temperature which lies above the temperature of the channel (18) or of the ambient air.

15. Process according to Claim 14, **characterized in that that** the liquid is introduced into the channel (18) and runs out of the channel (18) at regular intervals, the liquid circulating in the channel (18).

16. Process according to Claim 14 or 15, **characterized in that** the liquid is introduced into the channel (18) in an amount dependent on the temperature.

## Revendications

1. Réservoir à liquides, notamment bassin de stations d'épuration, avec une paroi droite (10), de préférence annulaire, sur le bord supérieur de laquelle est fixé un couvercle (13) pour former une surface de roulement (14) pour des roues de roulement (15) d'un pont racleur de boues (11) ou similaire, **caractérisé en ce que** le couvercle (13) forme au moins une canalisation ouverte au dessus (18) à l'intérieur de laquelle est disposée la surface de roulement (14) pour les roues de roulement (15) du pont racleur de boues (11).

2. Réservoir à liquides selon la revendication 1, **caractérisé en ce que** la canalisation (18) est étanche aux liquides, latéralement et sur sa face inférieure.

3. Réservoir à liquides selon la revendication 1 ou 2, **caractérisé en ce qu'**un moyen d'évacuation permettant de chasser des matières solides ou de la glace sur la surface de roulement (14) et/ou sur un liquide se trouvant dans la canalisation (18) hors de la trajectoire de la roue de roulement (15) est placé en amont d'au moins une roue de roulement (15).

4. Réservoir à liquides selon au moins l'une quelconque des revendications précédentes, **caractérisé en ce qu'**au moins un moyen de chauffage est placé dans la canalisation (18) et/ou dans le couvercle (13) pour chauffer un liquide se trouvant dans la canalisation (18).

5. Réservoir à liquides selon au moins l'une quelconque des revendications précédentes, **caractérisé par** des moyens pour créer un circuit de liquides dans la canalisation (18) ou entre le réservoir à liquides et la canalisation (18).

6. Réservoir à liquides selon au moins l'une quelconque des revendications précédentes, **caractérisé en ce** la canalisation (18) comporte des orifices d'évacuation ou des soupapes d'évacuation (31) pour évacuer le liquide.

7. Procédé pour garder une couverture (13) exempte de glace sur une paroi (10) d'un bassin de station d'épuration ou d'un autre réservoir à liquides, avec un pont racleur de boues (11) déplaçable le long de la couverture (13), la couverture comportant au moins une canalisation (18), dans laquelle des roues de roulement (15) du pont racleur de boues (11) se déroulent le long d'une surface de roulement (14), et des produits antigel étant introduits dans la canalisation (18), au moins en cas de gelée.

8. Procédé selon la revendication 7, **caractérisé en ce qu'**on introduit dans la canalisation (18) au moins un produit actif en cas de gelée, pour améliorer le contact entre des roues de roulement (15) et la surface de roulement (14), qui est plus lourd que l'eau.

9. Procédé selon la revendication 7 ou 8, **caractérisé en ce qu'**on utilise en tant que produit antigel un liquide présent dans la canalisation (18), qui a un point de fusion plus bas que celui de l'eau.

10. Procédé selon l'une quelconque des revendications précédentes, **caractérisé en ce qu'**on place dans la canalisation (18) un mélange d'eau et d'un produit pour abaisser le point de fusion.

11. Procédé selon l'une quelconque des revendications précédentes, **caractérisé en ce que** au moins en cas de gelée, on introduit dans la canalisation (18) de l'eau à un niveau d'eau assez haut pour qu'il subsiste au-dessus de la surface de roulement (14) des roues de roulement (15) une couche d'eau non gelée et pour que de la glace qui se forme à la surface de l'eau soit brisée par des roues de roulement (15) ou par des moyens d'évacuation associés à ces dernières.

12. Procédé selon l'une quelconque des revendications précédentes, **caractérisé en ce que** au moins en cas de gelée, on introduit dans la canalisation (18) un liquide qui est plus lourd que l'eau et qui fait preuve d'un point de fusion plus bas, pour qu'une couche de glace (22) née de la pluie ou de l'humidité surnage sur le liquide (21) et y soit brisée par les roues de roulement ou par des moyens d'évacuation associés à ces dernières.

13. Procédé selon l'une quelconque des revendications précédentes, **caractérisé en ce que** en cas de gelée, la canalisation contient de l'eau de décantation issue du réservoir à liquides.

14. Procédé selon l'une quelconque des revendications précédentes, **caractérisé en ce que** au moins en cas de gelée, du liquide issue du réservoir à liquides est introduite dans la canalisation (18), le liquide étant à une température supérieure à la température de la canalisation (18) ou de l'air ambiant.

15. Procédé selon la revendication 14, **caractérisé en ce que** le liquide est introduit régulièrement dans la canalisation (18) et s'écoule de la canalisation (18), le liquide circulant dans la canalisation (18).

16. Procédé selon la revendication 14 ou 15, **caractérisé en ce que** le liquide est introduit dans la canalisation (18) dans une quantité dépendant de la température.
